**Europäisches Patentamt**

(19) **European Patent Office**

**Office européen des brevets**

(11) Publication number: **0 238 000**
**A2**

(12) # EUROPEAN PATENT APPLICATION

(21) Application number: **87103746.1**

(22) Date of filing: **14.03.87**

(51) Int. Cl.³: **H 04 B 7/185**
**H 04 J 4/00**

(30) Priority: **17.03.86 IT 4777686**

(43) Date of publication of application:
**23.09.87 Bulletin 87/39**

(84) Designated Contracting States:
**DE FR GB NL SE**

(71) Applicant: **SELENIA SPAZIO S.p.A.**
**via Pile 3**
**I-67100 L'Aquila(IT)**

(72) Inventor: **Tommasi, Marcello**
**Via S. Giovanna Elisabetta 58**
**I-00189 Roma(IT)**

(74) Representative: **Gustorf, Gerhard, Dipl.-Ing.**
**Mühlenstrasse 1**
**D-8300 Landshut(DE)**

(54) **Regenerative and switching telecommunications transponder module with FDMA/TDM conversion functions.**

(57) Module for telecommunications transponder consisting of the following units:

The TDRX receiver unit, which receives radio signal R1 modulated by a useful digital TDM (Time Division Multiplexing) multiplexed multichannel signal ST, capable of:
extracting modulating digital signal ST,
extracting frame timing signals CK1 and CK2 and useful signal ST bits,
extracting one, or more, sub channels of the useful signal as telecommand signal SC.

The FMRX receiver unit, which receives a plurality of radio signals F1, F2 ... FN modulated by useful digital signals, and is capable of generating one or more digital signals T1, T2 ... TM, each made up of more than one TDM multiplated useful signal.

The TLMX telemetry unit, which measures received signal level, and is capable of generating a digital signal SM, which contains numerically coded values of the measurements taken.

The UCMX switching and multiplexing unit, which combines onto one of more output signals U1, U2 ... UA, (depending on command signal SC), the information contained in the digital signals entering the module and coming from the receiver and telemetry units and from outside the module.

Such module, to be adopted within a telecommunications transponder (possibly fitted on board satellite) together with amplifying, modulating and antenna subsystems, external to the module itself, provide telecommunication systems, utilizing FDMA (Frequency Division Multiple Access) techniques together with multiplexing TDM techniques, with a switching capability within the module.

If the single module capacity, in terms of number of channels dealt with or of the overall bit rate, should prove insufficient for some application, it is possible to utilize two or more modules which, in this case, are interconnected at UCMX level so as to obtain subsystems with a capacity which is a multiple of that offered by a single module.

FIG. 1

# Regenerative and switching telecommunications transponder module with FDMA/TDM conversion functions

## Description

The module for telecommunications transponder according to this invention consists of the following units:

- The TDRX receiver unit, which receives radio signal R1 modulated by a useful digital TDM (Time Division Multiplexing) multiplexed multichannel signal ST, capable of:

extracting modulating digital signal ST,
extracting frame timing signals CK1 and CK2 and useful signal ST bits,
extracting one, or more, sub channels of the useful signal as telecommand signal SC.

- The FMRX receiver unit, which receives a plurality of radio signals F1, F2 ... FN modulated by useful digital signals, and is capable of generating one or more digital signals T1, T2 ... TM, each made up of more than one TDM multiplated useful signal.

- The TLMX telemetry unit, which measures received signal level, and is capable of generating a digital signal SM, which contains numerically coded values of the measurements taken.

- The UCMX switching and multiplexing unit, which combines onto one or more output signals U1, U2 ... UA, (depending on command signal SC), the information contained in the digital signals entering the module and coming from the receiver and telemetry units and from outside the module.

Such module, to be adopted within a telecommunications transponder (possibly fitted on board satellite) together with amplifying, modulating and antenna subsystems, external to the module itself, provides telecommunication systems, utilizing FDMA (Frequency Division Multiple Access) techniques together with multiplexing TDM techniques, with a switching capability within the module.

If the single module capacity, in terms of number of channels dealt with or of the overall bit rate, should prove insufficient for some application, it is possible to utilize two or more modules which, in this case, are interconnected at UCMX level so as to obtain subsystems with a capacity which is a multiple of that offered by a single module.

## The device subject of the invention

The invention relates to a regenerating and switching module for application within a telecommunication transponder (possibly fitted to a satellite) giving way to FDMA/TDM conversion TLC systems with switching capability within the module.

## Field of application

The invention may be utilized to build civil or military radio telecommunication systems with terminals operating on different radio wave carriers and FDMA access, which receive one or more radio carries modulated by multiplexed TDM digital signals.

## Previous solutions

FDMA/TDM conversion technique is a known way to optimize the use of transmitted power.

The use of regeneration and switching means within a telecommunication transponder is a known technique.

Joint use of regenerating, switching and converting FDMA/TDM techniques within a TLC transponder has been, till now, an unknown fact.

The build of a single expandible modular unit with receiving, FDMA/TDM conversion, switching and multiplexing, telemetry and telecommand has been till now unknown.

### Problems solved by the invention presented

The invention presented is meant to make available to TLC system designers a building block to be used within a TLC transponder (possibly fitted on board satellite) to obtain systems with the same or multiple capacity of a single module by adoption of one or more interconnected modules.

The use of the module is absolutely general and does not depend on the frequency range used for the radio link, nor on the number of terminals provided by the system, nor on the type of TLC service provided. The module may therefore be considered as a TLC system component which, if available to the designer, provides means for troublefree design and development of systems which exploit transmitted power and bandwidth to an optimum extent.

The use of the module is particularly suited for systems via satellite, because the availability of module functions within a satellite transponder as well as optimizing power and bandwidth available (parameter which are both critical in systems via satellite), provides connections between terminals with SCPC-FDMA transmission (Single Channel Per Carrier - Frequency Division Multiple Access) and TDM reception (Time Division Multiplexing) through a single path, via satellite.

Description of the invention

The invention will now be described with reference to one of its presently preferred forms, which is reported as an illustration without being limited to this, with reference to the tables enclosed.

Figure 1 Functional schematic of the regenerating and switching module

      TDRX     TDM signal receiver

      FMRX     FDMA signal receiver

      TLMX     Telemetry unit

      UCMX     Switching and multiplexing unit

Figure 2 Functional schematic of the TDRX unit

      DWC1     Down converter 1

      OL1      Local oscillator 1

      AD1      Directional coupler 1

      TDDM     TDM signal demodulator

      CKE      Timing signals extractor

      TCE      Sub channel extractor

      BFSU     Serial output buffer

Figure 3 FMRX unit functional schematic

      DWC2        Down converter 2

      OL2         Local Oscillator 2

      AD2         Directional coupler 2

      PWSP       Signal splitter

      IDC1, 2 ... Base band converters 1, 2, ... M

      MRTX1,2 ... FDM/TDM converters 1, 2, ... M

      CDRX1      Telecommand decoder 1

      FMTG       FMRX timing unit

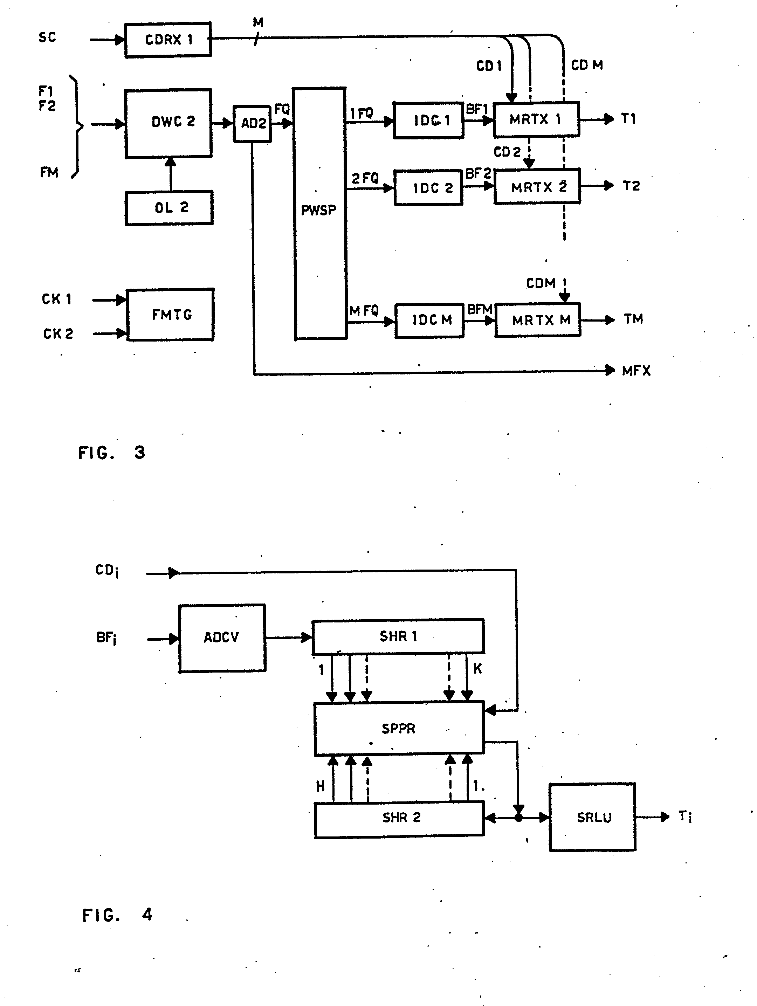

Figure 4 MRTX unit functional diagram
      ADCV     analogue to digital converter
      SHR1     Shift register 1
      SHR2     Shift register 2
      SPPR     Signal Processor
      SRLU     Output serializer unit

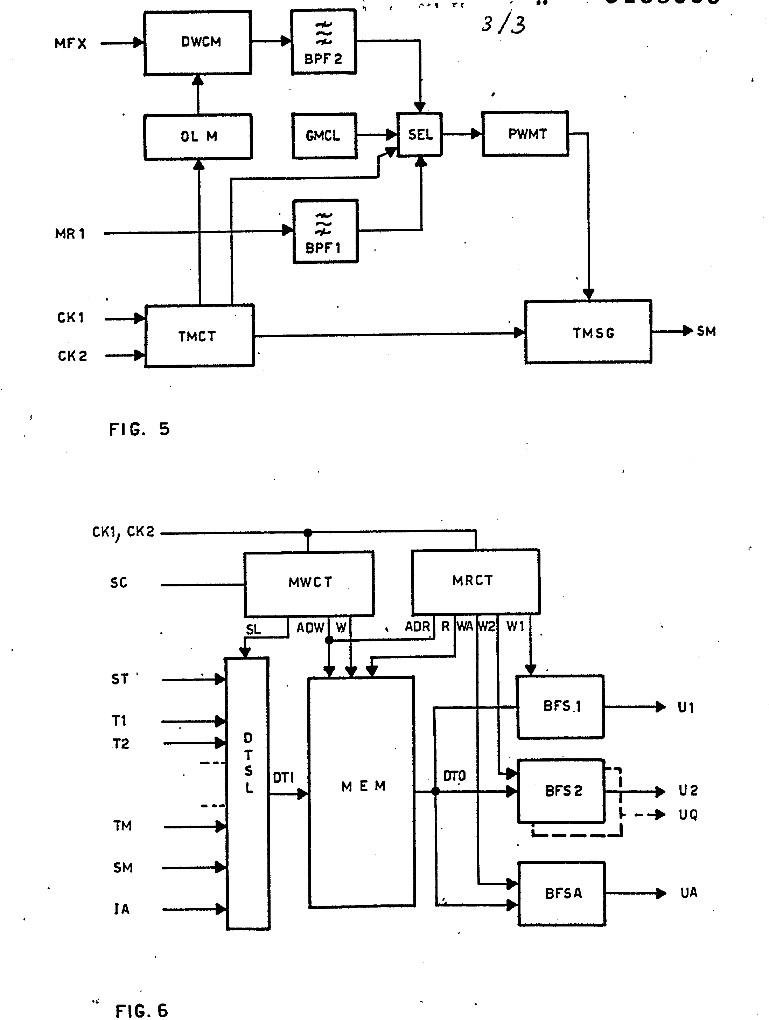

Figure 5 TLMX unit functional diagram
      DWCM     Measurement down converter
      OLM      Measurement local oscillator
      BPF1     Band pass filter 1
      BPF2     Band pass filter 2
      GNCL     Calibration generator
      SEL      Signal selector
      PWMT     Power meter
      TMCT     measuring timing generator
      TMSG     measurement serializer

Figure 6 UCMX unit functional schematic
      DTSL     Input serializer
      MEM      Switching memory
      BFS1, 2 ... Output serializer buffer 1, 2, ...
      BFSA     Auxiliary output serializer buffer
      MWCT     Write control unit
      MRCT     Read control unit

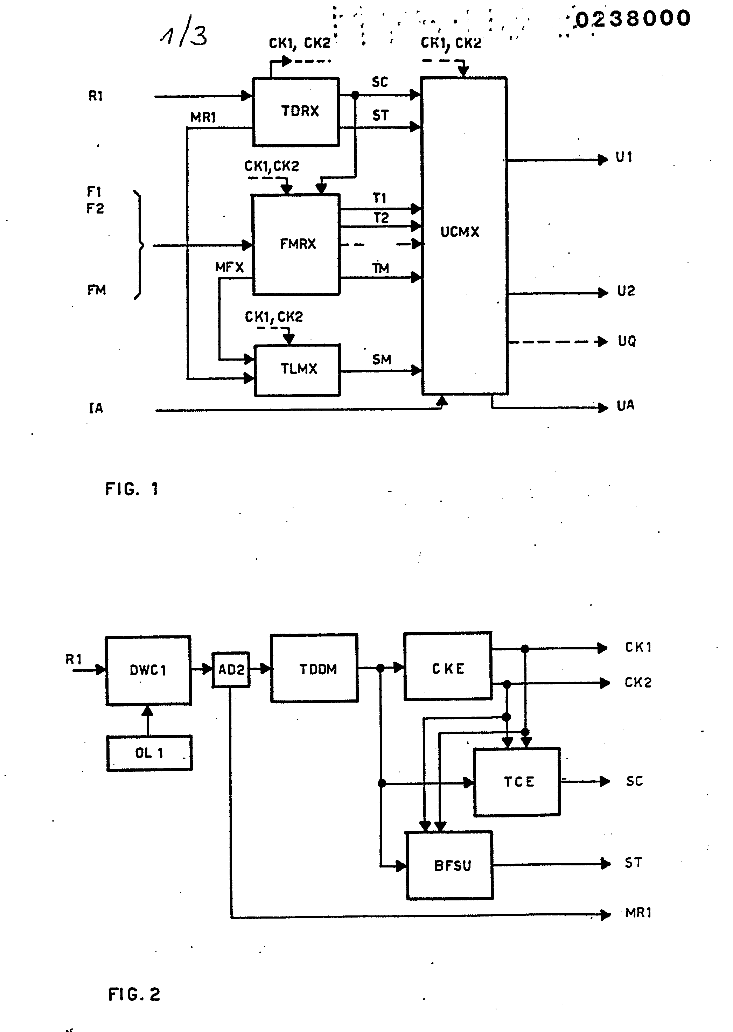

Figure 1 provides the functional schematic of the module presented by this invention, consisting of TDRX, FMRX, TLMX, USMX units. With reference to such figure, the module operation may be described as follows:

a) The TDRX unit receives radio signal R1, modulated by a multi-channel digital signal ST. One or more channels making up ST are used within the module as telecommand signals (SC).

Unit TDRX extracts modulating signal ST from signal R1 by separating signal SC and also extracts bit and frame clocks CK1 and CK2 of signal ST.

Part of signal R1, converted to intermediate frequency within TDRX unit, is sent as measurement signal MR1 to TLMX unit, which provides level measurement.

b) FMRX unit receives a radio signal consisting of an ensemble of radio wave carries F1, F2 ... FN which generally lie on contiguous bands.

Signal SC informs FMRX of each carrier allocation, bandwidth and modulation bit rate.

The FMRX unit, based upon telecommand information received through SC signal, provides for each carrier demodulation, later multiplexing the digital signals obtained, over M output digital signals T1, T2, ... TM. Part of received signals F1, F2 ... FN, converted to intermediate frequency within FMRX unit, is sent as MFX measurement signal to unit TLMX which provides for each signal level measurement.

FMRX timing is obtained coherently starting from CK1 and CK2 signals generated by TDRX.

c) TLMX unit receives intermediate frequency converted measurement signals from TDRX and FMRX and provides for MR1 level measurement and for analysis of the spectrum occupied by MF1 ... MFN signals within MFX signal with a prefixed definition.

The measurement information, together with other calibration information generated within the module, is provided as multiplexed digital signal SM.

TLMX timing is obtained coherently from CK1 and CK2 signals generated by TDRX.

d) The UCMX unit receives from TDRX and FMRX units useful digital signals ST and T1, T2, ... TN, from TLMX unit telemeasurement signal SM and from outside the module digital "auxiliary input" signal IA (useable for multiple module interconnection).

UCMX receives telecommand signal SC from TDRX and based upon information received from said signal, reassembles the information contained in the input signals in order to generate output signals U1, U2 ... UN and UA signal (useable for multi-module interconnection). UCMX unit timing is obtained coherently starting from CK1 and CK2 signals generated by TDRX.

Figure 2 shows the functional schematic of TDRX unit already described at a more general level within Figure 1 schematic. With reference to figure 2, TDRX unit operation may be described as follows:

a) Radio frequency signal R1 is converted to intermediate frequency by subunit DWC1, utilizing, as beating frequency, the signal provided by local oscillator OL1.

OL1 frequency is available in advance so as to transpose to the same intermediate frequency R1 signals set within the module working bandwidth.

DWC1, as well as frequency conversion, provides for band pass filtering of the intermediate frequency signal with bandwidth adequate for R1 spectrum characteristics.

b) Part of the intermediate frequency signal is picked up by directional coupler HD1 and is available as signal MR1. The remainder of the intermediate frequency signal is sent to digital demodulator TDDM which, once the modulating signal is obtained, sends it to clock extractor CKE and to serial output buffer BFSU and to telecommand signal extractor TCE.

c) Sub units TCE and BFSU use frame (CK1) and bit (CK2) clock signals generated by CKE to synchronize such signals with the whole base band signal which is provided as ST signal by sub unit BFSU, and with telecommand signal SC, extracted from the base band signal by TCE subunit.

Figure 3 is the FMRX unit functional schematic, more generally described back in the schematic of Figure 1. With reference to figure 3, the FMRX unit operation may be described as follows:

a) The entire reception frequency band occupied by carriers F1, F2 ... FN is shifted to intermediate frequency by sub unit DWC2 which utilizes local oscillator OL2 signal as beating frequency.

OL2 frequency is available in advance to translate to the same IF any reception band within the module working bandwidth. As well as for frequency conversion, DWC2 provides also for pass band filtering of the intermediate frequency signal with bandwidth amplitude matching the spectral characteristics of the group of carriers received F1, F2 ... FN.

b) A portion of the intermediate frequency signal is picked off by directional coupler AD2 and made available as MFX signal. The residual part of the IF signal is sent to signal partitioner PWSP which splits available power into M signals having the same spectral contents.

c) Each of the M signals output by subunit PWSP is sent to one of frequency converters IDC1, IDC2 ... IDCM. Each converter is preset to translate to base band the M$^{th}$ part of the intermediate frequency signal band available from PWSP.

In this way the M signals BF1, BF2 ... BFM will have similar spectrum characteristics and with spectrum components within O and F if (M x F) is the intermediate frequency signal bandwidth.

M signals BF1, BF2 ... BFM are in turn sent to a matching set of FDM/TDM converters shown as MRTX1, MRTX2 ... MRTXN.

d) Telecommand signal SC, which comes from outside FMRX unit, is sent to sub unit CDRX1, which provides for extraction of the information required for presetting of sub units MRTX1, MRTX2, ... CDRX1, starting from signal SC, generates M command signals CD1, CD2,... CDM which define, for each MRTX, the algorithm to be used in the FDM/TDM conversion process and, in particular, the number of carriers which, following conversion operations, have been set in the O-F band related to each MRTX subunit.

If we assume, as a non limiting example, that carries F1, F2 ... FN are equispaced and modulated by signals having identical bit rate, it will be necessary to specify to all MRTX subunits, that N/M carries (where N/M is integer) are allocated to each relevant band.

e) MRTX subunits, suitably preset through commands CD1, CD2, ... CDM, provide for processing of M base band signals BF1, BF2 ... BFM, extracting modulating signals of single carriers and remultiplexing them into M output signals T1, T2, ... TM.

f) FMTG unit generates, starting from clock signals CK1 and CK2, all timings required for FMRX operation.

Figure 4 is one of the possible functional schematics which may be adopted to implement sub unit MRTX (part of FMRX), already more generally described in connection with figure 3 schematic.

With reference to figure 4, MRTX operation may be described as follows:

a) Base band signal BFi is applied to the input of analogue to digital converter ADCV which provides for sampling at a 2F sample per second rate, where F is the frequency in Hertz of BFi maximum frequency spectral component.

b) A series of K consecutive samples is memorized in shift register SHR1.

c) Starting from the K input samples, digital signal processor SPPR generates a series of output samples as a function of the preset processing algorithm through command signal CDi, and are sent to SRLU serial output subunit and to shift register SHR2.

This way register SHR2 memorizes H consecutive output samples.

d) Processor SPPR then generates output samples as a function of the last K input samples and as a function of the last H output samples, according to a processing algorithm which depends upon command signal CDi, so as to implement FDM carries demodulation and TDM remultiplexing of demodulated digital signals.

N.B. The solution presented is only one of the possible configurations which may be used to implement functions described and should be understood as an illustrative and not limiting example to be used in module implementation.

Figure 5 is the TLMX unit functional schematic which has been more generally described in figure 1. With reference to Figure 5, TLMX unit operation may be described as follows:

a) The entire MFX intermediate frequency signal bandwidth is shifted to a second intermediate frequency by subunit DWCM which uses the signal provided by local oscillator OLM as beating frequency. OLM frequency is set by a control signal which is varied by control subunit TMCT so that different portions of the MFX signal band are made to match filter BPF2 bandpass.

This configuration gives a BPF2 output which consists of the MFX band portion frequency shifted and selected as a function of OLM generated frequency.

b) Selection subunit SEL selects and delivers power meter PWMT or BPF2 output signal or BPF1 filtered MR1 signal or a calibration signal generated by calibration generator GNCL. Input signal selection is based upon the control signal delivered by control subunit TMCT.

c) PWMT subunit measures the level of the signal applied to its input and correspondingly provides a digital signal which represents the power level measured. Such signal is sent to measurement serializer TMSG, which, based upon timing information provided by TMCT and measurement data provided by PWMT, generates a multiplexed digital signal SM containing MR1 level measurement data (and therefore also that of original signal R1), and also measurement data of the power distribution within MFX band and therefore also of the levels related to carries F1, F2 ... FM received.

Figure 6 is the schematic of USMX functional unit, described above in a more general manner in connection with Figure 1 schematic. With reference to figure 6, UCMX operation may be described as follows:

a) DTSL subunit has the task to receive signals ST, T1, T2 ... TM, SM, IA applied to its input through an equal number of series to parallel converter buffers and, depending upon command SC, received by control and write MWCT, to deliver one of the parallel signals obtained.

b) Parallel signal (DTI) is applied to MEM memory unit and is written on the memory locations addressed by ADW signal, under MWCT control.

c) MRCT control and read subunit, at times which differ from those used for writing, reads the contents of memory MEM at the addresses provided as ADR signal: addressed memory location contents are made available at MEM output as DTO parallel signal.

d) Still under MRCT control, further DTO signal configurations are written onto one or more serializing and output buffers BFS1, BFS2, ... BFSQ, BFSA which memorize DTO configurations, handing them back, further on, in serial form as U1, U2 ... UQ, UA signals.

e) Sub units MWCT and MRCT utilize, as base timing, CK1 and CK2 bit and frame clock signals generated by sub unit TDRX.

MEM switching memory write logics and therefore the switching function resulting, is set by subunit MWCT as a function of telecommand signal SC received from outside the USMX unit.

## Claims

1.
Regenerating and switching module for telecommunication applications, characterized by the fact that it includes a first unit (TDRX - Figure 1) for reception, demodulation and demultiplexing of one or more carriers modulated by digital signals, a second unit (FMRX - Figure 1) for reception, demodulation and TDM (Time Division Multiplexing) remultiplexing onto one or more digital signals of a plurality of digitally modulated carriers, a third unit (UCMX - Figure 1) which reassembles a plurality of internally or externally generated signals onto one, or more, digital signals, and a fourth unit (TLMX - Figure 1) which carries out received carrier level amplitude measurement and transforms resulting measurements into digital signals.

2. Regenerating and switching module for TLC transponder as per claim 1, where receiver unit TDRX consists of a first sub unit (OL1 - Figure 2) which generates a beating frequency, a second subunit (DWC1 - Figure 2) for frequency conversion and band pass filtering, a third subunit (AD1 - Figure 2) which picks off a portion of the intermediate frequency signal, a fourth subunit (TDDM - Figure 2) which demodulates the intermediate frequency signal, a fifth subunit (CKE - Figure 2) which extracts clock, bit and frame signals from the digital signal demodulated by TDDM, a sixth subunit (TCE - Figure 2) which demultiplexes the signal demodulated by TDDM, and a seventh subunit (BFSU - Figure 2) for resynchronization of the signal demodulated by TDDM.

3. Regenerating and switching module as per claim 1 where the receiver, demodulation and remultiplexing unit TDM operating on a plurality of carriers modulated by digital signals (FMRX - Figure 1) consists of a first subunit (DWC2, Figure 3) which converts input signals to intermediate frequency using, as beating frequency, that provided by a second subunit (OL2 - Figure 3), of a third sub unit (AD2 - Figure 3) which extracts a fraction of the signal obtained for further measurement, of a fourth subunit (PWSP - Figure 3) which splits the IF signal power into a plurality of signals with identical contents, of a group of subunits (IDC1, ...IDCM - Figure 3) which shift to base band a sub band of the IF signal, of a group of identical subunits, each of which processes a different base band signal according to modes which can be set through a suitable command and provides as output a digital signal which corresponds to TDM multiplexing of the signals which modulate carriers allocated to the band portion corresponding to the band of the base band signal processed, where the command signal used for processing mode selection is obtained by sub unit CDRX1 (Figure 3) which relies upon the telecommand signal which comes from outside FMRX.

4. Regenerating and switching module as per claim 1, where the telemetry unit (TLMX - Figure 1) consists of a first sub unit (DWCM - Figure 5) which carries out conversion to an intermediate measurement frequency of input signals using, as beating frequency, that provided by a second subunit (OLM - Figure 5) where such beating frequency is set by a command signal coming from a third subunit (TMCT - Figure 5) with timing and command functions, of a fourth unit (BPF2 - Figure 5) which selects part of the signal band to measurement IF, of a fifth sub unit (BPFI - Figure 5) which lets through only the useful band of the input signal, of a sixth subunit (GNCL - Figure 5) which generates a signal of known and preset power, of a seventh subunit (SEL - Figure 5) which selects one among more input signals in response to a command signal coming from sub unit TMCT, of an eighth subunit (PWMT - Figure 5) which measures input signal level and outputs a digital signal which containes all measurement information, and of a ninth sub unit (TMSG, Figure 5) which serializes measurement data supplied by PWMT according to a predetermined time sequence.

5. Regenerating and switching module as per claim 1, where the swiching and multiplexing unit (UCMX Figure 1) consists of a first subunit (DTSL - Figure 6) for series/parallel conversion of input signals for their output presentation in a series set by a suitable command, of a second subunit (MEM - Figure 6) for temporary (transient) memorization of signals to be treated, of a group of subunits with parallel to series conversion functions (BFS1, BFS2 ... BFSA - Figure 6), of a sub unit (MWCT - Figure 6) which has the task to control memory writing operations, and of a sub unit (MRCT - Figure 6) which checks transfer of signals present in the memory towards parallel/series conversion subunits.

FIG. 1

FIG. 2

FIG. 3

FIG. 4

FIG. 5

FIG. 6